# EUROPEAN PATENT SPECIFICATION

(11) **EP 1 777 761 B1**
(45) Date of publication and mention of the grant of the patent: **02.06.2010**
(21) Application number: 06121984.6
(22) Date of filing: 09.10.2006
(51) Int. Cl.: H01M 2/16, H01M 10/42, H01M 4/139, H01M 10/052

(54) **Lithium Rechargeable Battery**
Wiederaufladbare Lithiumbatterie
Pile au lithium rechargeable

(30) Priority: 11.10.2005 KR 20050095469
(43) Date of publication of application: 25.04.2007
(73) Proprietor: Samsung SDI Co., Ltd., Gyeonggi-do (KR)
(72) Inventor: Lee, Sangwon, Gyeonggi-do (KR)
(74) Representative: Walaski, Jan Filip

(56) References cited:
- EP-A- 1 146 576
- EP-A1- 0 836 238
- WO-A-01/43210
- JP-A- 2004 288 586
- US-A- 5 925 483
- US-A1- 2003 118 904
- US-A1- 2004 029 014
- US-A1- 2005 095 504
- US-B1- 6 277 514

## Description

Aspects of the present invention relate to a lithium rechargeable battery. More particularly, aspects of the present invention relate to a lithium rechargeable battery, which shows excellent safety when heat emission occurs by the abnormal operation of the battery and maintains excellent high-rate charge/discharge characteristics.

Recently, as portable electronic instruments have been designed to have a low weight and a compact size, a battery used as a drive source for such instruments have been required to have a low weight and a high capacity. Particularly, active and intensive research and development for a lithium rechargeable battery has been conducted, because the lithium rechargeable battery has a drive voltage of 3.6V or higher. This voltage is at least three times higher than the drive voltage of a Ni-Cd battery or Ni-MH battery, widely used as a power source for portable electronic instruments. Additionally, the lithium rechargeable battery provides a higher energy density per unit weight.

A lithium rechargeable battery generates electric energy by redox reactions occurring upon the lithium ion intercalation/deintercalation in a cathode and an anode. A lithium rechargeable battery is obtained by using a material capable of reversible lithium ion intercalation/deintercalation as a cathode active material and an anode active material and by introducing an organic electrolyte or polymer electrolyte between the cathode and the anode.

In general, a lithium rechargeable battery includes: an electrode assembly formed by winding an anode plate, a cathode plate and a separator interposed between both electrode plates into a predetermined shape, (such as a jelly-roll shape) a can for housing the electrode assembly and an electrolyte; and a cap assembly mounted to the top of the can. The cathode plate of the electrode assembly is electrically connected to the cap assembly via a cathode lead, while the anode plate of the electrode assembly is electrically connected to the can via an anode lead.
The separator has its basic function of separating the cathode plate from the anode plate so as to prevent a short circuit in the lithium rechargeable battery.

Additionally, it is important for the separator to allow infiltration of an electrolyte necessary for carrying out electrochemical reactions in the battery and to maintain high ion conductivity. Particularly, for the lithium rechargeable battery, the separator is required to have an additional function to prevent a substance capable of inhibiting such electrochemical reactions from moving in the battery and/or to ensure the safety of the battery under abnormal conditions. Generally, the separator includes a microporous polymer membrane based on polyolefin (such as polypropylene or polyethylene) or a multilayer membrane including multiple sheets of such membranes. Such conventional separators have a sheet-like or film-like porous membrane layer, and have a disadvantage in that the sheet-like separator may shrink while the pores of the porous membrane are blocked, when heat emission occurs by an internal short circuit or an overcharge condition. Therefore, if the sheet-like separator is shrunk by such internal heat emission of the battery, there is a portion that is not covered by the separator and thus allows the cathode and the anode to be in direct contact with each other, resulting in possible ignition, bursting and/or explosion of the battery.

US2004/0029014 and US2005/0095504 disclose methods of manufacturing an electrode for use in a lithium rechargeable battery comprising the steps of: (i) providing a collector; (ii) forming an electrode active material layer on a surface of the collector; (iii) forming a combined separator layer on a surface of the electrode active material layer, the combined separator layer comprising an electrolyte salt, a ceramic powder and a binder.

Accordingly, aspects of the present invention provide a lithium rechargeable battery, which shows excellent thermal stability and high-rate charge/discharge characteristics.

Accordingly, the present invention provides a method of manufacturing an electrode for use in a lithium rechargeable battery comprising the steps of:
providing a collector;
forming an electrode active material layer on a surface of the collector;
forming a first separator layer on a surface of the electrode active material layer, the first separator layer comprising an electrolyte salt and a binder;
forming a second separator layer containing ceramic powder on a surface of the first separator layer;
dissolving the electrolyte salt from the first separator layer in a non-aqueous solvent such that the first separator layer is left with a porosity at or between 20% and 80%.

The present invention also provides a method of manufacturing an electrode for use in a lithium rechargeable battery comprising the steps of:
providing a collector;
forming an electrode active material layer on a surface of the collector;
forming a combined separator layer on a surface of the electrode active material layer, the combined separator layer comprising an electrolyte salt, a ceramic powder and a binder;
dissolving the electrolyte salt from the combined separator layer in a non-aqueous solvent such that the combined separator layer is left with a porosity at or between 20% and 80%.

The present invention also provides a lithium rechargeable battery, comprising:
a cathode including a cathode collector and a cathode active material layer formed on the cathode collector;
an anode including an anode collector and an anode active material layer formed on the anode collector;
a non-aqueous electrolyte between the cathode and anode;
a first separator layer containing an electrolyte salt and a binder formed on a surface of one of the cathode active material layer and the anode active material layer; and
a second separator layer containing ceramic powder formed on a surface of the first separator layer,
wherein, when the electrolyte salt is dissolved from the first separator layer (30, 30') in the non-aqueous electrolyte, the first separator layer (30, 30') has a porosity at or between 20% and 80%.

The present invention also provides a lithium rechargeable battery, comprising:
a cathode including a cathode collector and a cathode active material layer formed on the cathode collector;
an anode including an anode collector and an anode active material layer formed on the anode collector;
a non-aqueous electrolyte; and
a combined separator layer comprising an electrolyte salt, a binder and ceramic powder and which is formed on a surface of one of the cathode active material layer and the anode active material layer,
wherein, when the electrolyte salt is dissolved from the combined separator layer in the non-aqueous electrolyte, the combined separator layer has a porosity at or between 20% and 80%.

According to an aspect of the invention, the electrolyte salt is a lithium salt. According to an aspect of the invention, the lithium salt is at least one salt selected from the group consisting of LiPF₆, LiBF₄, LiSbF₆, LiAsF₆, LiClO₄, LiCF₃SO₃, Li(CF₃SO₂)₂N, LiC₄F₉SO₃, LiAlO₄, LiAlCl₄, LiN(CₓF₂ₓ₊₁SO₂)(CyF_{2y+1}SO₂) (wherein each of x and y represents a natural number), LiCl and LiI.

According to an aspect of the invention, the binder is a polymer resin.
According to an aspect of the invention, the binder is at least one material selected from the group consisting of polyvinylidene fluoride (PVDF), polyhexafluoropropylene-polyvinylidene fluoride copolymer (PVdF/HFP), ethylene-tetrafluoroethylene copolymer (ETFE), polychlorotrifluoroethylene (PCTFE), poly(vinyl acetate), polyvinyl alcohol, polyethylene oxide, polyvinyl pyrrolidone, alkylated polyethylene oxide, polyvinyl ether, poly(methyl methacrylate), poly(ethyl acrylate), polytetrafluoroethylene (PTE), and polyacrylonitrile.

According to an aspect of the invention, the electrolyte salt and the binder are mixed in a weight ratio ranging from 1:1 to 2:1.

According to an aspect of the invention, the first separator layer has a thickness of 1∼40 µm.

According to an aspect of the invention, the first separator layer has a thickness of 5∼30 µm.

According to an aspect of the invention, the second separator layer is formed by dispersing the ceramic powder on a surface of the first separator layer.

According to an aspect of the invention, the ceramic powder includes secondary particles of the ceramic material, obtained by partial sintering or recrystallization of primary particles of the ceramic material.

According to an aspect of the invention, the secondary particles include hexahedral particle clusters (having the shape of a bunch of grapes) or layered particle clusters. According to an aspect of the invention, the primary particles having the form of hexahedral particle clusters have an average diameter of 0.01∼0.3 µm.

According to an aspect of the invention, the primary particles having the form of layered particle clusters include scale-like flakes having a width of 100nm∼1 µm. According to an aspect of the invention, the ceramic material is at least one material selected from the group consisting of silica (SiO₂), alumina (Al₂O₃), zirconium oxide (ZrO₂), and titanium oxide (TiO₂).

According to an aspect of the invention, the ceramic material is at least one material selected from the group consisting of insulative nitrides, hydroxides and ketones of each of zirconium, aluminum, silicon and titanium.

According to an aspect of the invention, the ceramic material has a heat expansion ratio of 0.2% or less at 200 °C and a heat expansion ratio of 0.1∼0.4% at 400 °C. According to an aspect of the invention, the ceramic material has a heat conductivity corresponding to a range of 10% based on 100W/(mXK) at a temperature ranging from 500 °C to 1000 °C.

According to an aspect of the invention, the ceramic material shows a dielectric loss of 10⁻⁵∼10⁻² at a frequency of 1MHz.

According to an aspect of the invention, the battery further includes an additional polyolefin-based resin film between the cathode and the anode.

According to an aspect of the invention, the polyolefin-based resin film is selected from the group consisting of a single-layer film of polyethylene, a single-layer film of polypropylene and a multilayer film of polypropylene-polyethylene-polypropylene.

According to an aspect of the invention, the binder and the ceramic material are mixed in a weight ratio ranging from 5:95 to 20:80.

According to an aspect of the invention, the combined separator layer has a thickness of 1~40µm.

According to an aspect of the invention, the combined separator layer has a thickness of 5~30 µm.

According to an aspect of the invention, at least a part of the electrolyte salt in the combined separator layer is dissolved in a non-aqueous electrolyte to form pores in the combined separator layer.

According to an aspect of the invention, the combined separator layer has a porosity of 20~80%.

Additional aspects and/or advantages of the invention will be set forth in part in the description which follows and, in part, will be obvious from the description, or may be learned by practice of the invention.

The above and other objects, aspects, features and/or advantages of the present invention will be more apparent and more readily appreciated from the following detailed description taken in conjunction with the accompanying drawings, in which:

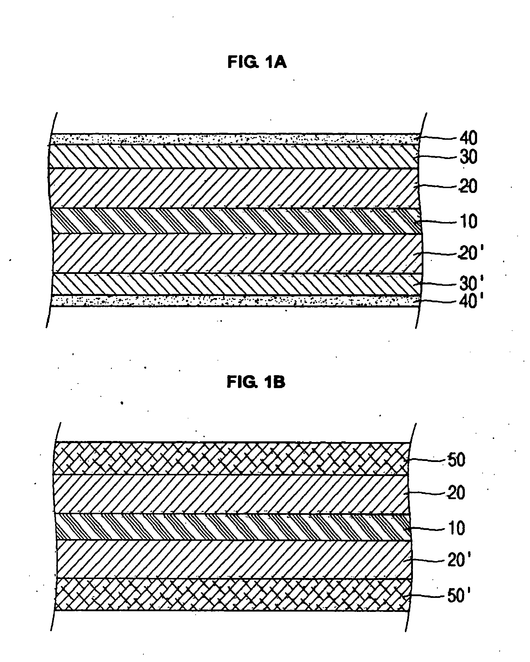

FIG. 1a is a schematic sectional view showing the electrode structure of a lithium rechargeable battery according to an embodiment of the present invention; and
FIG. 1b is a schematic sectional view showing the electrode structure of a lithium rechargeable battery according to another embodiment of the present invention.

Reference will now be made in detail to the embodiments of the present invention, examples of which are illustrated in the accompanying drawings and in specific examples of these embodiments, wherein like reference numerals refer to the like elements throughout. The embodiments are described below in order to explain the present invention by referring to the figures. It is to be understood that the following examples are illustrative only, and the scope of the present invention is not limited thereto.

Hereinafter, aspects of the present invention will be explained in more detail. An embodiment of the present invention relates to a lithium rechargeable battery, which has a first separator layer containing an electrolyte salt and a binder as well as a second separator layer containing ceramic powder, or a combined separator layer containing an electrolyte salt, a binder and ceramic powder, on at least one of the cathode and the anode of the battery, and thus can prevent an internal short circuit caused by heat shrinkage of a separator even when the internal temperature of the battery increases rapidly, and can provide excellent high-rate discharge characteristics.

In an embodiment of the present invention as shown in FIG. 1a, the electrode includes an electrode collector 10, an electrode active material layer 20, 20' formed on the electrode collector 10. A first separator layer 30, 30' containing an electrolyte salt and a binder is on the layer 20, 20'. A second separator layer 40, 40' containing ceramic powder is on the first separator layer 30, 30'.

Additionally, as shown in another embodiment in FIG. 1b, the electrode according to another embodiment of the present invention includes the electrode collector 10, and the electrode active material layer 20, 20' formed on the electrode collector 10.

A combined separator layer 50, 50' containing the electrolyte salt, the binder and the ceramic powder is formed on the electrode active material layer 20, 20'.

According to an aspect of the invention, the electrode is manufactured using an electrode active material slurry. The electrode active material slurry is obtained by mixing and dispersing an electrode active material and a binder. Optionally, the slurry includes a conductive agent in a solvent. The slurry is coated on the electrode collector 10 to form the electrode active material layer 20, 20'.

A polymer solution obtained by mixing and dispersing an electrolyte salt and a binder. The polymer solution is coated on the electrode active material layer 20, 20' to form the first separator layer 30, 30'. Then, the ceramic powder is dispersed on the first separator layer 30, 30' to form the second separator layer 40, 40'. By doing so, it is possible to obtain an electrode with good heat resistance. When the first separator layer 30, 30' is formed before the second separator layer 40, 40', it is possible to eliminate a subsequent drying step or to reduce the time needed for the drying step due to the drying effect provided by the ceramic powder dispersed on the first separator layer 30, 30'. Also, in this case, the first separator layer 30, 30' has an increased level of porosity and provides improved high-rate discharge characteristics.

Meanwhile, it is possible to fabricate an electrode with good heat resistance by forming the combined separator layer 50, 50' containing the ceramic powder as shown in FIG. 1B, instead of dispersing the ceramic powder on the surface of the first separator layer 30, 30' as shown in FIG. 1A. Herein, the combined separator layer 50, 50' is formed by mixing and dispersing the electrolyte salt, the binder and the ceramic powder in a solvent to provide a polymer solution and coating the polymer solution on the electrode active material layer 20, 20'. While shown as separate, it is understood that the second layer 40, 40' or the first layer 30, 30' can be used in addition to the layer 50. 50'.

The coating process for forming the first separator layer 30, 30' and the combined separator layer 50, 50' can be performed by way of any method that does not adversely affect the physical properties of the electrode active material 20, 20'. For example, the coating process can be by way of dip coating, spray coating, gravure roll coating, slot die coating, or the like. Any methods of the above methods or combinations thereof may be used in the scope of the present invention.

The electrolyte salt contained in each of the first separator layer 30, 30' and the combined separator layer 50, 50' includes a salt that can be dissolved in a non-aqueous electrolyte used in a lithium rechargeable battery. In the lithium rechargeable battery according to aspects of the present invention, the electrolyte salt contained in the first separator layer 30, 30' and the combined separator layer 50, 50' is dissolved at least partially in a non-aqueous solvent, so that pores can be formed in the first separator layer 30, 30' and the combined separator layer 50, 50'. Due to the pores formed in the first separator layer 30, 30' and the combined separator layer 50, 50', the lithium secondary battery shows improved electrolyte permeability and lithium ion diffusion rate, and thus can provide improved high-rate discharge characteristics. However, it is understood that the electrolyte is not limited to non-aqueous electrolytes.

While not required in all aspects, the electrolyte salt contained in the first separator layer 30, 30' and the combined separator layer 50, 50' is a lithium salt. Particular examples of the lithium salt that may be used include, but are not limited to, LiPF₆, LiBF₄, LiSbF₆, LiAsF₆, LiClO₄, LiCF₃SO₃, LiN(CF₃SO₂)₂N, LiC₄F₉SO₃, LiAlO₄, LiAlCl₄, LiN(CₓF₂ₓ₊₁SO₂) (C_{y}F₂ₓ₊₁ SO₂) (wherein each of x and y represents a natural number), LiCl, LiI, or combinations thereof. If such a lithium salt is used as the electrolyte salt, it is possible to increase the capacity of a lithium rechargeable battery because the source of lithium ions, participating in the electrochemical reactions in the battery, increases.

While not required in all aspects, the binder contained in the first separator layer 30, 30' and the combined separator layer 50, 50' is a polymer resin. To improve the heat resistance of an electrode, a polymer resin having a decomposition temperature of 200 °C or higher is preferred. Particular examples of the binder that may be used include, but are not limited to, polyvinylidene fluoride (PVDF), polyhexafluoropropylene-polyvinylidene fluoride copolymer (PVdF/HFP), ethylene-tetrafluoroethylene copolymer (ETFE), polychlorotrifluoroethylene (PCTFE), poly(vinyl acetate), polyvinyl alcohol, polyethylene oxide, polyvinyl pyrrolidone, alkylated polyethylene oxide, polyvinyl ether, poly(methyl methacrylate), poly(ethyl acrylate), polytetrafluoroethylene (PTE), polyacrylonitrile, or mixtures thereof. While not required in all aspects, the electrolyte salt and the binder are used in a weight ratio ranging from 1:1 to 2:1, considering the adhesion to the electrode active material layer 20, 20' and ion conductivity. Meanwhile, when the electrolyte salt, the binder and the ceramic powder are mixed and dispersed in a solvent to provide a polymer solution, and then the polymer solution is coated onto the electrode active material layer 20, 20' to form the combined separator layer 50, 50' containing the ceramic powder, the binder and the ceramic powder may be used in a weight ratio ranging from 5:95 to 20:80. However, other weight ratios can be used. The solvent is used to provide the polymer solution by dispersing the electrolyte salt therein, followed by mixing, the binder and/or the ceramic powder. While not required in all aspects, the solvent is selected depending on the kind of the binder. For example, when PVDF is used as the binder, dimethyl formamide or N-methyl pyrrolidone may be used as the solvent. When polyvinyl pyrrolidone is used as the binder, isopropyl alcohol or N-methyl pyrrolidone may be used as the solvent. Additionally, when polyethylene oxide is used as the binder, acetonitrile may be used as the solvent.

While not required in all aspects, the ceramic powder used in the present invention includes, but is not limited to, the secondary particles of the ceramic material, obtained by partial sintering or recrystallization of the primary particles of the ceramic material. The secondary particles are present (preferably) in the shape of hexahedral particle clusters (similar to the shape of a bunch of grapes) or layered particle clusters. Additionally, the primary particles may also be present in the shape of the hexahedral particle clusters or the layered particle clusters, wherein scale-like particles are stacked and bonded to each other.

According to an aspect of the invention, an individual particle, forming the hexahedral particle clusters or the secondary particles, has an average size/diameter of 0.01~0.3 µm. An individual scale-like flake forming the layered particle clusters has an average width of 100 nm~1 µm. The aforementioned dimensions of particles can be determined by observing a photograph of a material having good quality, taken by SEM (scanning electron microscopy).

The ceramic material that may be used in an aspect of the present invention includes, but is not limited to, silica (SiO₂), alumina (Al₂O₃), zirconium oxide (ZrO₂), titanium oxide (TiO₂), ion conductive glass, or a mixture thereof. Of these, zirconium oxide is preferred.

Other ceramic materials include insulative nitrides, hydroxides or ketones of zirconium, aluminum, silicon or titanium, or combinations thereof. Herein, the term "insulative nitride" is used to exclude a conductive nitride, such as titanium nitride (TiN) from the scope of the ceramic materials suitable to be used in this aspect of the present invention.

Zirconium oxide shows excellent dispersibility in terms of the zeta(ξ) potential relationship, when mixing and stirring the zirconium oxide with a binder. This provides excellent productivity. Also, zirconium oxide is chemically stable and cost efficient. Moreover, zirconium oxide shows an excellent heat emission property and forms a good p/n bonding along with a lithium compound at high temperature, so that it has diode characteristics. Further, zirconium oxide prevents an excessive amount of lithium ions from being intercalated into an anode.

To form the agglomerated secondary particles, various chemical and physical methods can be used. For example, the corresponding material is completely dissolved or the surface of the primary particles is partially dissolved by using a chemical substance, followed by recrystallization. Particular examples of the physical methods include application of an external pressure. Among these, an advisable method includes heating the particles to a temperature near the melting point of the particles, followed by necking.

When the particles are partially molten or partially sintered to form particle agglomerates, the ceramic material is molten to such a degree that the resultant combined separator layer 50, 50' can have a low density and the unique particle shape can be maintained, while the paste or dispersion for forming the porous membrane is formed by mixing and agitating the ceramic material with the binder and the solvent. For example, when the ceramic material (e.g. zirconium oxide) is heated at 900 °C for 10 minutes, a structure of partially sintered particles can be obtained. It is also possible to reprecipitate the ceramic material by dissolving the ceramic material completely by using a solvent providing high solubility to the ceramic material, or by mixing the primary particles with a part of the solvent and removing the solvent.

While no required in all aspects, the ceramic material preferably has a heat expansion ratio of 0.2% or less at 200 °C and a heat expansion ratio of 0.1~0.4% at 400 °C. The heat expansion ratio is a ratio of the volume at a temperature to a volume at room temperature. If the ceramic material has a heat expansion ratio greater than the above range, it may cause an increase in the internal pressure of a battery, resulting in deformation of the battery.

According to an aspect of the invention, the ceramic material has a heat conductivity of 10W/(m.K) at a broad range of temperatures ranging from 500 °C to 1000 °C. Additionally, the ceramic material preferably has a relative permittivity of 1~20. If the ceramic material has a relative permittivity greater than 20, it is not possible to provide sufficient capacity. If the ceramic material has a relative permittivity less than 1, it is not possible to form a material having a band gap. Meanwhile, the ceramic material shows an dielectric loss of 10⁻⁵~10⁻² at a frequency of 1MHz. If the dielectric loss is less than 10⁻⁵, it is not possible to obtain a desired band gap due to the low reproducibility and the porous membrane cannot be produced stably. If the dielectric loss is higher than 10⁻², it is not possible to obtain sufficient capacity.

Each of the first separator layer 30, 30' and the combined separator layer 50, 50' has a thickness controlled depending on the ion conductivity and while not required in all aspects, is preferably 5~30 µm. If each of the first separator layer 30, 30' and the combined separator layer 50, 50' has a thickness less than 1 µm, the layer shows a low strength. If each of the first separator layer 30, 30' and the combined separator layer 50, 50' has a thickness greater than 40 µm, overvoltage may occur due to the increased internal resistance. Also, in the latter case, it is not possible to obtain a desired level of energy density.

According to an aspect of the invention, each of the first separator layer 30, 30' and the combined separator layer 50, 50' has a porosity of 20~80%, considering the ion conductivity and mechanical strength. When the second separator layer 40, 40' is formed on the first separator layer 30, 30', it is preferable for the ceramic powder to be dispersed and adhered on the surface of the first separator layer 30, 30' in view of the ion conductivity. For example, the ceramic powder may be dispersed and adhered on the first separator layer so that it shows a surface coating ratio of 50% or less. Herein, the term "surface coating ratio" means the ratio of the area of the surface of the first separator layer 30, 30' occupied by the ceramic powder to the total area of the surface of the first separator layer 30, 30'.

According to an aspect of the present invention, the first separator layer 30, 30'/the second separator layer 40, 40', and/or the combined separator layer 50, 50' containing the ceramic powder may be applied to either or both of the cathode and the anode. Although conventional separators may shrink at a high temperature, the first separator layer 30, 30'/the second separator layer 40, 40', and/or the combined separator layer 50, 50' containing the ceramic powder shows excellent thermal stability so that it cannot be shrunk or molten even when the temperature of a battery increases. Additionally, when the electrolyte salt contained in the first separator layer 30, 30' and/or the combined separator layer 50, 50' is dissociated in the non-aqueous electrolyte for a lithium rechargeable battery, interstitial volumes may be formed in those layers 30, 40, 50, thereby increasing the porosity. Such pores can contribute to the improvement of electrolyte permeability and lithium ion conductivity in the first separator layer 30, 30' stet the combined separator layer 50, 50'.

Since the first separator layer 30, 30'/the second separator layer 40, 40' or the combined separator layer containing the ceramic powder functions as a separator by itself, it is possible to avoid a need for an additional separator between both electrodes.

However, while not required in all aspects, an additional polyolefin-based separator film is present between both electrodes in a wound electrode assembly, like a conventional lithium rechargeable battery. In this embodiment, the first separator layer 30, 30'/the second separator layer 40, 40' or the combined separator layer 50, 50' containing the ceramic powder, as well as the polyolefin-based separator film serve as separators for the resultant rechargeable battery. The polyolefin-based film separator that may be used in an aspect of the present invention includes a single-layer film of polyethylene or polypropylene, or a multilayer film of polypropylene-polyethylene-polypropylene.

The cathode of the lithium rechargeable battery includes a cathode active material capable of lithium ion intercalation/deintercalation. Examples of cathode active materials that may be used in aspects of the present invention include, but are not limited to, at least one composite oxide containing lithium and at least one element selected from the group consisting of cobalt, manganese and nickel. Typical examples of the cathode active material that may be used in aspects of the present invention include the following composite oxides (1) to (13):

LiₓMn_{1-y}M_{y}A₂ (1)

LiₓMn_{1-y}M_{y}O_{2-z}X_{z} (2)

LiₓMn₂M_{4-z}X_{z} (3)

LiₓMn_{2-y}M_{y}M'_{z}A₄ (4)

LiₓCo_{1-y}M_{y}A₂ (5)

LiₓCo_{1-y}M_{y}O_{2-z}AX_{z} (6)

LiₓNi_{1-y}M_{y}A₂ (7)

LiₓNi_{1-y}M_{y}O_{2-z}X_{z} (8)

LiₓNi_{1-y}Co_{y}O_{2-z}X_{z} (9)

LiₓNi_{1-y-z}Co_{y}M_{z}A_{α} (10)

LiₓNi_{1-y-z}Co_{y}M_{z}O_{2-α}X_{α} (11)

LiₓNi_{1-y-z}Mn_{y}M_{z}A_{α} (12)

LiₓNi_{1-y-z}Mn_{y}M_{z}O_{2-α}X_{α} (13)

wherein 0.9≤x≤1.1; 0≤y≤0.5; 0≤z≤0.5; 0≤α≤2; M and M' are the same or different, and each of M and M' is selected from the group consisting of Mg, Al, Co, K, Na, Ca, Si, Ti, Sn, V, Ge, Ga, B, As, Zr, Mn, Cr, Fe, Sr, V and rare earth elements; A is selected from the group consisting of O, F, S and P; and X is selected from the group consisting of F, S and P.

The anode of the lithium rechargeable battery includes an anode active material capable of lithium ion intercalation/deintercalation. Examples of anode active materials may include, but are not limited to, carbonaceous materials such as crystalline carbon, amorphous carbon, carbon composites and carbon fiber, lithium metal and lithium alloys. For example, the amorphous carbon includes hard carbon, cokes, mesocarbon microbead (MCMB) fired at a temperature of 1500 °C or lower, mesophase pitch-based carbon fiber (MPCF), etc. The crystalline carbon includes graphite materials and particular examples thereof include natural graphite, graphitized cokes, graphitized MCMB, graphitized MPCF, etc. Preferably, the carbonaceous material has a d(002) value (interplanar distance) of between 3.351Å and 3.38 Å, and an Lc value (crystallite size) of at least 20nm, as measured by X-ray diffraction. Particular examples of the lithium alloys that may be used in the present invention include alloys of lithium with aluminum, zinc, bismuth, cadmium, antimony, silicon, lead, tin, gallium or indium. However, it is understood that other materials and/or interplanar distances can be used.

The collectors 10 usable in the cathode and the anode generally includes, but are not limited to, stainless steel, nickel, aluminum, copper or titanium; alloys thereof; or aluminum, copper or stainless steel, surface-treated with carbon, nickel, titanium or silver. The cathode collector that may be used in aspects of the present invention includes, but is not limited to, aluminum or aluminum alloy. The anode collector that may be used in the present invention includes but is not limited to copper or copper alloy. The cathode collector and the anode collector may take the form of foil, a film, a sheet, a punched body, a porous body or a foamed body. In general, the collector has a thickness of 1~50 µm, and preferably 1~30 µm. If the collector is too thin, it shows a low mechanical strength. On the other hand, if the collector is too thick, it occupies the volume of a battery in a high proportion, resulting in a drop in the energy density of the battery.

While not required in all aspects, the cathode and/or the anode may further comprise a conductive agent. The conductive agent that may be used in aspects of the present invention includes, but are not limited to, a graphite-based conductive agent such as artificial graphite or natural graphite; a carbon black-based conductive agent such as acetylene black, ketjen black, denka black, thermal black or channel black; conductive fibers such as carbon fibers or metallic fibers; metal powder such as copper, nickel, aluminum or silver; conductive metal oxides such as titanium oxide; and conductive polymers such as polyaniline, polythiophen, polyacetylene or polypyrrole. The aforementioned conductive agents may be used alone or in combination. The conductive agent is used, preferably, in an amount of 0.1~10wt% based on the weight of the cathode active material. If the conductive agent is used in an amount less than 0.1wt%, electrochemical characteristics may be degraded. On the other hand, if the conductive agent is used in an amount greater than 10wt%, energy density per unit weight decreases. However, it is understood that other amounts can be used.

The solvent for use in dispersing the electrode active material, the binder and the conductive agent includes, but is not limited to, a non-aqueous solvent or an aqueous solvent. Particular examples of the non-aqueous solvent include N-methyl-2-pyrrolidone (NMP), dimethyl formamide, dimethyl acetamide, N,N-dimethylaminopropylamine, ethylene oxide, tetrahydrofuran, or the like.

The non-aqueous electrolyte for a lithium rechargeable battery includes a lithium salt and a non-aqueous organic solvent. The non-aqueous electrolyte may further include other additives for improving charge/discharge characteristics and for preventing overcharge. The lithium salt serves as a source for supplying lithium ions in a battery and empowers a lithium rechargeable battery to perform basic functions. The non-aqueous organic solvent functions as a medium, through which ions participating in electrochemical reactions in a battery can move. However, it is understood that other aspects of the invention include other types of organic and/or polymer electrolytes and/or liquid, solid or gel electrolytes.

The lithium salt that may be used in aspects of the present invention includes any one salt selected from LiPF₆, LiBF₄, LiSbF₆, LiAsF₆, LiClO₄, LiCF₃SO₃, Li(CF₃SO₂)₂N, LiC₄F₉SO₃, LiAlO₄, LiAlCl₄, LiN(CₓF₂ₓ₊₁SO₂)(CyF_{2y+1}SO₂) (wherein each of x and y represents a natural number), LiCl, and LiI, or a mixture containing two or more of them. The lithium salt is used, preferably, in a concentration of 0.6~2.0M, and more preferably in a concentration of 0.7~1.6M. If the lithium salt concentration is less than 0.6M, the resultant electrolyte has a low conductivity, resulting in degradation in the quality of the electrolyte. If the lithium salt concentration is greater than 2.0M, the resultant electrolyte has an increased viscosity, resulting in a drop in the lithium ion conductivity.

While not required in all aspects, the non-aqueous organic solvent may include carbonate, ester, ether or ketone alone, or in combination. The organic solvent should have a high dielectric constant (polarity) and low viscosity so as to increase the ion dissociation degree and to facilitate ion conduction. In general, a mixed solvent containing at least two solvents, including a solvent with a high dielectric constant and high viscosity and a solvent with a low dielectric constant and low viscosity, is preferred.

Among the non-aqueous organic solvents, the carbonate solvent of an aspect of the invention includes a mixed solvent of a cyclic carbonate with a linear carbonate. Particular examples of the cyclic carbonate include, but are not limited to, ethylene carbonate(EC), propylene carbonate (PC), 1,2-butylene carbonate, 2,3-butylene carbonate, 1,2-pentylene carbonate, 2,3-pentylene carbonate, etc. Ethylene carbonate and propylene carbonate having a high dielectric constant are preferred. When artificial graphite is used as an anode active material, ethylene carbonate is preferred. Particular examples of the linear carbonate include, but are not limited to, dimethyl carbonate (DMC), diethyl carbonate (DEC), dipropyl carbonate (DPC), methyl propyl carbonate (MPC), ethyl methyl carbonate (EMC), ethyl propyl carbonate (EPC), etc. Among these, dimethyl carbonate, ethyl methyl carbonate and diethyl carbonate having a low viscosity are preferred.

Particular examples of the ester that may be used in aspects of the present invention include, but are not limited to, methyl acetate, ethyl acetate, propyl acetate, methyl propionate, ethyl propionate, γ-butyrolactone (GBL), γ-valerolactone, γ-caprolactone, δ-valerolactone, ε-caprolactone, etc. Additionally, particular examples of the ether include tetrahydrofuran, 2-methyltetrahydrofuran, dibutyl ether, etc. Particular examples of the ketone that may be used in aspects of the present invention include, but are not limited to, polymethyl vinyl ketone, etc.
In order to further explain aspects of the invention, a specific example of the embodiments will be discussed with reference to a comparative example. However, it is understood that the invention is not limited to the specific examples.

### Comparative Example 1

LiCoO₂ as a cathode active material, polyvinylidene fluoride as a binder and carbon (Super-P) as a conductive agent were dispersed in N-methyl-2-pyrrolidone as a solvent in the weight ratio of 92:4:4 to form cathode active material slurry. The slurry was coated on aluminum foil having a thickness of 15 µm, dried and rolled to provide a cathode. Crystalline artificial graphite as an anode active material and PVDF as a binder were mixed in the weight ratio of 92:8, and the mixture was dispersed in N-methyl-2-pyrrolodone to form anode active material slurry. The slurry was coated on copper foil (collector) having a thickness of 10 µm, dried and rolled to provide an anode.

The cathode and the anode obtained as described above were wound and compressed together with a separator formed of polyethylene. The resultant unit cell was inserted into a prismatic can. Next, an electrolyte was added to the can to provide a lithium rechargeable battery. The electrolyte was a mixed solvent of ethylene carbonate with diethyl carbonate (wherein volume ratio of EC: DEC = 1:1), containing 1.0M LiPF₆ dissolved therein.

### Example 1

LiPF₆ as an electrolyte salt and PVDF as a binder were mixed in the weight ratio of 3:2, and the mixture was dispersed in NMP to form a polymer solution. A first separator layer 30, 30' was formed on the anode active material layer obtained as described in Comparative Example 1 by using the polymer solution to a thickness of 10 µm. Then, zirconium oxide (ZrO₂) powder was dispersed on the first separator layer 30, 30' to form a second separator layer 40, 40'.
A lithium rechargeable battery was provided in the same manner as described in Comparative Example 1.

### Overcharge Test

Ten samples of each of the batteries according to Comparative Example 1 and Example 1 were subjected to overcharge for 2.5 hours under constant-current/constant-voltage conductions of 1C (790 mAh)/12V, after being charged at room temperature. Then, each battery was checked. The results are shown in the following Table 1.

### Penetration Test

A nail was allowed to penetrate completely through the center of each of the fully charged lithium rechargeable batteries according to Comparative Example 1 and Example 1, at a rate of 40 mm/sec or higher along the direction perpendicular to the longitudinal axis of each battery. Then, each battery was checked. The results are shown in the following Table 1.

### High-Rate Discharge Capacity Test

Each of the lithium rechargeable batteries according to Comparative Example 1 and Example 1 was subjected to 3C/3V cut-off discharge, after it is subjected to 20mAh cut-off charge under constant current-constant voltage conditions of 1C/4.2V. The 3C discharge capacity of the battery according to Example 1 was calculated by taking the discharge capacity of the battery according to Comparative Example 1 as 100%. The results are shown in the following Table 1. The discharge capacity value as shown in Table 1 is the average value of 10 battery samples.

In the following Table 1, the number preceding L means the number of batteries used in the test. Overcharge safety is evaluated by the following criteria: L0 is excellent; L1 is leakage; L2 is scintillation; L2 is flame; L3 is smoking; L4 is ignition; and L5 is explosion. For example, 10L0 means that all of the ten batteries used in the test show excellent safety.

**Table 1**

| | 1C-12V Overcharge | Penetration | 3C Discharge Capacity (%) |
|---|---|---|---|
| Comp. Ex. 1 | 10L4 | 10L4 | 100% |
| Ex. 1 | 10L0 | 10L0 | 150% |

As can be seen from the foregoing, the lithium rechargeable battery according to aspects of the present invention has excellent thermal safety and shows excellent high-rate discharge characteristics.

Although embodiments of the present invention has been described for illustrative purposes, those skilled in the art will appreciate that various modifications, additions and substitutions are possible, without departing from the scope of the invention as defined in the accompanying claims.

## Claims

1. A method of manufacturing an electrode for use in a lithium rechargeable battery comprising the steps of:
providing a collector (10);
forming an electrode active material layer (20, 20') on a surface of the collector (10);
forming a first separator layer (30, 30') on a surface of the electrode active material (20, 20') layer, the first separator layer (30, 30') comprising an electrolyte salt and a binder;
forming a second separator layer (40, 40') containing ceramic powder on a surface of the first separator layer (30, 30');
dissolving the electrolyte salt from the first separator layer (30, 30') in a non-aqueous solvent such that the first separator layer (30, 30') is left with a porosity at or between 20% and 80%.

2. The method as claimed in claim 1, wherein the second separator layer (40, 40') is formed by dispersing the ceramic powder on the surface of the first separator layer (30, 30').

3. A method of manufacturing an electrode for use in a lithium rechargeable battery comprising the steps of:
providing a collector (10);
forming an electrode active material layer (20, 20') on a surface of the collector (10);
forming a combined separator layer (50) on a surface of the electrode active material layer (20, 20'), the combined separator layer (50) comprising an electrolyte salt, a ceramic powder and a binder;
dissolving the electrolyte salt from the combined separator layer (50) in a non-aqueous solvent such that the combined separator layer (50) is left with a porosity at or between 20% and 80%.

4. The method as claimed in claim 3, wherein the binder and the ceramic material are mixed in a weight ratio ranging at or between 5:95 and 20:80.

5. The method as claimed in any one of the preceding claims, wherein the step of dissolving the electrolyte salt comprises assembling the electrode in a lithium rechargeagble battery including a non-aqueous electrolyte.

6. The method as claimed in any one of the preceding claims, wherein the electrolyte salt is a lithium salt.

7. The method as claimed in claim 6, wherein the lithium salt is at least one salt selected from the group consisting of LiPF₆, LiBF₄, LiSbF₆, LiAsF₆, LiClO₄, LiCF₃SO₃, Li(CF₃SO₂)₂N, LiC₄F₉SO₃, LiAlO₄, LiAlCl₄, LiN(CₓF₂ₓ₊₁SO₂)(CyF_{2y+1}SO₂) (wherein each of x and y represents a natural number), LiCl, LiI, or combinations thereof.

8. The method as claimed in any one of the preceding claims, wherein the binder is a polymer resin.

9. The method as claimed in claim 8, wherein the binder is at least one material selected from the group consisting of polyvinylidene fluoride (PVDF), polyhexafluoropropylene-polyvinylidene fluoride copolymer (PVdF/HFP), ethylene-tetrafluoroethylene copolymer (ETFE), polychlorotrifluoroethylene (PCTFE), poly(vinyl acetate), polyvinyl alcohol, polyethylene oxide, polyvinyl pyrrolidone, alkylated polyethylene oxide, polyvinyl ether, poly(methyl methacrylate), poly(ethyl acrylate), polytetrafluoroethylene (PTE), polyacrylonitrile, or combinations thereof.

10. The method as claimed in any one of the preceding claims, wherein the electrolyte salt and the binder are mixed in a weight ratio format or between 1:1 and 2:1.

11. The method as claimed in any one of the preceding claims, wherein the first separator layer (30, 30') or the combined separator layer (50) has a thickness at or between 1 µm and 40 µm.

12. The method as claimed in claim 11, wherein the first separator layer (30, 30') or the combined separator layer (50) has a thickness at or between 5 µm and 30 µm

13. The method as claimed in any one of the preceding claims, wherein the ceramic powder includes secondary particles of the ceramic material, obtained by partial sintering or recrystallization of primary particles of the ceramic material.

14. The method as claimed in claim 13, wherein the secondary particles include hexahedral particle clusters and/or layered particle clusters.

15. The method as claimed in claim 13 or 14, wherein the primary particles having the form of hexahedral particle clusters have a diameter at or between 0.01 µm and 0.3 µm.

16. The method as claimed in claim 13 or 14, wherein the primary particles having the form of layered particle clusters include scale-like flakes having a width at or between 100 nm and 1 µm.

17. The method as claimed in any one of the preceding claims, wherein the ceramic material is at least one material selected from the group consisting of silica (SiO₂), alumina (Al₂O₃), zirconium oxide (ZrO₂), titanium oxide (TiO₂), or combinations thereof.

18. The method as claimed in any one of claims 1 to 16, wherein the ceramic material is at least one material selected from the group consisting of insulative nitrides, hydroxides and ketones of each of zirconium, aluminum, silicon, titanium, or combinations thereof.

19. The method as claimed in any one of the preceding claims, wherein the ceramic material has a heat expansion ratio of 0.2% or less at 200 °C and a heat expansion ratio of at or between 0.1 % and 0.4% at 400 °C.

20. The method as claimed in any one of the preceding claims, wherein the ceramic material has a heat conductivity corresponding to a range of 10% based on 100W/(m.K) at a temperature range at or between 500 °C and 1000 °C.

21. The method as claimed in any one of the preceding claims, wherein the ceramic material shows a dielectric loss at or between 10⁻⁵ and 10⁻² at a frequency of 1MHz.

22. The method as claimed in any one of the preceding claims, further comprising providing a polyolefin-based resin film between the cathode and the anode.

23. The method as claimed in claim 22, wherein the polyolefin-based resin film is selected from the group consisting of a single-layer film of polyethylene, a single-layer film of polypropylene and a multilayer film of polypropylene-polyethylene-polypropylene.

24. A lithium rechargeable battery, comprising:
a cathode including a cathode collector and a cathode active material layer formed on the cathode collector;
an anode including an anode collector and an anode active material layer formed on the anode collector;
a non-aqueous electrolyte between the cathode and anode;
a first separator layer (30, 30') containing an electrolyte salt and a binder formed on a surface of one of the cathode active material layer and the anode active material layer; and
a second separator layer (40, 40') containing ceramic powder formed on a surface of the first separator layer (30, 30'),
wherein, when the electrolyte salt is dissolved from the first separator layer (30, 30') in the non-aqueous electrolyte, the first separator layer (30, 30') has a porosity at or between 20% and 80%.

25. A lithium rechargeable battery, comprising:
a cathode including a cathode collector and a cathode active material layer formed on the cathode collector;
an anode including an anode collector and an anode active material layer formed on the anode collector;
a non-aqueous electrolyte; and
a combined separator layer (50) comprising an electrolyte salt, a binder and ceramic powder and which is formed on a surface of one of the cathode active material layer and the anode active material layer,
wherein, when the electrolyte salt is dissolved from the combined separator layer (50) in the non-aqueous electrolyte, the combined separator layer (50) has a porosity at or between 20% and 80%.

## Patentansprüche

1. Verfahren zur Herstellung einer Elektrode zur Verwendung in einer wiederaufladbaren Lithium-Batterie, wobei das Verfahren die folgenden Schritte umfasst:
Bereitstellen eines Kollektors (10);
Ausbilden einer Schicht aus elektrodenaktivem Material (20, 20') auf einer Oberfläche des Kollektors (10);
Ausbilden einer ersten Separatorschicht (30, 30') auf einer Oberfläche der Schicht aus elektrodenaktivem Material (20, 20'), wobei die erste Separatorschicht (30, 30') ein Elektrolytsalz und ein Bindemittel umfasst;
Ausbilden einer zweiten Separatorschicht (40, 40'), die ein Keramikpulver enthält, auf einer Oberfläche der ersten Separatorschicht (30, 30');
Lösen des Elektrolytsalzes aus der ersten Separatorschicht (30, 30') in einem nichtwässrigen Lösungsmittel, so dass die erste Separatorschicht (30, 30') mit einer Porosität von oder zwischen 20 % und 80 % belassen wird.

2. Verfahren nach Anspruch 1, wobei die zweite Separatorschicht (40, 40') durch Dispergieren des Keramikpulvers auf der Oberfläche der ersten Separatorschicht (30, 30') ausgebildet wird.

3. Verfahren zur Herstellung einer Elektrode zur Verwendung in einer wiederaufladbaren Lithium-Batterie, wobei das Verfahren die folgenden Schritte umfasst:
Bereitstellen eines Kollektors (10);
Ausbilden einer Schicht aus elektrodenaktivem Material (20, 20') auf einer Oberfläche des Kollektors (10);
Ausbilden einer kombinierten Separatorschicht (50) auf einer Oberfläche der Schicht aus elektrodenaktivem Material (20, 20'), wobei die kombinierte Separatorschicht (50) ein Elektrolytsalz, ein Keramikpulver und ein Bindemittel umfasst;
Lösen des Elektrolytsalzes aus der kombinierten Separatorschicht (50) in einem nichtwässrigen Lösungsmittel, so dass die kombinierte Separatorschicht (50) mit einer Porosität von oder zwischen 20% und 80% belassen wird.

4. Verfahren nach Anspruch 3, wobei das Bindemittel und das Keramikmaterial in einem Gewichtsverhältnis gemischt werden, das bei oder zwischen 5:95 und 20:80 liegt.

5. Verfahren nach einem der vorhergehenden Ansprüche, wobei der Schritt des Lösens des Elektrolytsalzes das Zusammenfügen der Elektrode in einer wiederaufladbaren Lithium-Batterie, die einen nichtwässrigen Elektrolyten enthält, umfasst.

6. Verfahren nach einem der vorhergehenden Ansprüche, wobei es sich bei dem Elektrolytsalz um ein Lithiumsalz handelt.

7. Verfahren nach Anspruch 6, wobei es sich bei dem Lithiumsalz um mindestens ein Salz handelt, das aus der Gruppe bestehend aus LiPF₆, LiBF₄, LiSbF₆, LiAsF₆, LiClO₄, LiCF₃SO₃, Li(CF₃SO₂)₂N, LiC₄F₉SO₃, LiAlO₄, LiAlCl₄, LiN (CₓF₂ₓ₊₁SO₂) (CyF_{2y+1}SO₂) (wobei jedes x und y für eine natürliche Zahl steht), LiCl, LiI oder Kombinationen davon ausgewählt ist.

8. Verfahren nach einem der vorhergehenden Ansprüche, wobei es sich bei dem Bindemittel um ein Polymerharz handelt.

9. Verfahren nach Anspruch 8, wobei es sich bei dem Bindemittel um mindestens ein Material handelt, das aus der Gruppe bestehend aus Polyvinylidenfluorid (PVDF), Polyhexafluorpropylen/Polyvinylidenfluorid-Copolymer (PVdF/HFP), Ethylen/Tetrafluorethylen-Copolymer (ETFE), Polychlortrifluorethylen (PCTFE), Poly(vinylacetat), Polyvinylalkohol, Polyethylenoxid, Polyvinylpyrrolidon, alkyliertem Polyethylenoxid, Polyvinylether, Poly(methylmethacrylat), Poly(ethylacrylat), Polytetrafluorethylen (PTE), Polyacrylnitril oder Kombinationen davon ausgewählt ist.

10. Verfahren nach einem der vorhergehenden Ansprüche, wobei das Elektrolytsalz und das Bindemittel in einer Gewichtsverhältnisform von oder zwischen 1:1 und 2:1 gemischt werden.

11. Verfahren nach einem der vorhergehenden Ansprüche, wobei die erste Separatorschicht (30, 30') oder die kombinierte Separatorschicht (50) eine Dicke von oder zwischen 1 µm und 40 µm aufweist.

12. Verfahren nach Anspruch 11, wobei die erste Separatorschicht (30, 30') oder die kombinierte Separatorschicht (50) eine Dicke von oder zwischen 5 µm und 30 µm aufweist.

13. Verfahren nach einem der vorhergehenden Ansprüche, wobei das Keramikpulver Sekundärteilchen des Keramikmaterials enthält, die durch Teilsinterung oder Umkristallisierung von Primärteilchen des Keramikmaterials erhalten wurden.

14. Verfahren nach Anspruch 13, wobei die Sekundärteilchen hexaedrische Teilchencluster und/oder geschichtete Teilchencluster enthalten.

15. Verfahren nach Anspruch 13 oder 14, wobei die Primärteilchen, die die Form hexaedrischer Teilchencluster haben, einen Durchmesser von oder zwischen 0,01 µm und 0,3 µm aufweisen.

16. Verfahren nach Anspruch 13 oder 14, wobei die Primärteilchen, die die Form geschichteter Teilchencluster haben, schuppenartige Flocken enthalten, die eine Breite von oder zwischen 100 nm und 1 µm aufweisen.

17. Verfahren nach einem der vorhergehenden Ansprüche, wobei es sich bei dem Keramikmaterial um mindestens ein Material handelt, der aus der Gruppe bestehend aus Siliciumdioxid (SiO₂), Aluminiumoxid (Al₂O₃), Zirconiumdioxid (ZrO₂), Titandioxid (TiO₂) oder Kombinationen davon ausgewählt ist.

18. Verfahren nach einem der Ansprüche 1 bis 16, wobei es sich bei dem Keramikmaterial um mindestens ein Material handelt, das aus der Gruppe bestehend aus isolierenden Nitriden, Hydroxiden und Ketonen von jeweils Zirconium, Aluminium, Silicium, Titan oder Kombinationen davon ausgewählt ist.

19. Verfahren nach einem der vorhergehenden Ansprüche, wobei das Keramikmaterial einen Wärmeausdehnungsquotienten von 0,2% oder weniger bei 200°C und einen Wärmeausdehnungsquotienten von oder zwischen 0,1% und 0,4% bei 400°C aufweist.

20. Verfahren nach einem der vorhergehenden Ansprüche, wobei das Keramikmaterial eine Wärmeleitfähigkeit aufweist, die einem Bereich von 10% entspricht, basierend auf 100 W/(m.K) bei einem Temperaturbereich von oder zwischen 500°C und 1000°C.

21. Verfahren nach einem der vorhergehenden Ansprüche, wobei das Keramikmaterial einen dielektrischen Verlust von oder zwischen 10⁻⁵ und 10⁻² bei einer Frequenz von 1 MHz zeigt.

22. Verfahren nach einem der vorhergehenden Ansprüche, das weiterhin das Bereitstellen einer polyolefinbasierten Harzfolie zwischen der Kathode und der Anode umfasst.

23. Verfahren nach Anspruch 22, wobei die polyolefinbasierte Harzfolie aus der Gruppe bestehend aus einer einlagigen Polyethylenfolie, einer einlagigen Polypropylenfolie und einer mehrlagigen Polypropylen-/Polyethylen-/Polypropylenfolie ausgewählt ist.

24. Wiederaufladbare Lithium-Batterie, die Folgendes umfasst:
eine Kathode, die einen Kathodenkollektor und eine Schicht aus kathodenaktivem Material, der auf dem Kathodenkollektor ausgebildet ist, enthält;
eine Anode, die einen Anodenkollektor und eine Schicht aus anodenaktivem Material, der auf dem Anodenkollektor ausgebildet ist, enthält;
einen nichtwässrigen Elektrolyten zwischen der Kathode und der Anode;
eine erste Separatorschicht (30, 30'), die ein Elektrolytsalz und ein Bindemittel enthält und auf einer Oberfläche der Schicht aus kathodenaktivem Material oder der Schicht aus anodenaktivem Material ausgebildet ist; und
eine zweite Separatorschicht (40, 40'), die Keramikpulver enthält und auf einer Oberfläche der ersten Separatorschicht (30, 30') ausgebildet ist,
wobei, wenn das Elektrolytsalz aus der ersten Separatorschicht (30, 30') in dem nichtwässrigen Elektrolyten gelöst wird, die erste Separatorschicht (30, 30') eine Porosität von oder zwischen 20% und 80% aufweist.

25. Wiederaufladbare Lithium-Batterie, die Folgendes umfasst:
eine Kathode, die einen Kathodenkollektor und eine Schicht aus kathodenaktivem Material, der auf dem Kathodenkollektor ausgebildet ist, enthält;
eine Anode, die einen Anodenkollektor und eine Schicht aus anodenaktivem Material, der auf dem Anodenkollektor ausgebildet ist, enthält;
einen nichtwässrigen Elektrolyten und
eine kombinierte Separatorschicht (50), die ein Elektrolytsalz, ein Bindemittel und Keramikpulver umfasst und die auf einer Oberfläche der Schicht aus kathodenaktivem Material oder der Schicht aus anodenaktivem Material ausgebildet ist,
wobei, wenn das Elektrolytsalz aus der kombinierten Separatorschicht (50) in dem nichtwässrigen Elektrolyten gelöst wird, die kombinierte Separatorschicht (50) eine Porosität von oder zwischen 20% und 80% aufweist.

## Revendications

1. Procédé de fabrication d'une électrode destinée à être utilisée pour une batterie au lithium rechargeable, comprenant les étapes consistant à :
se procurer un collecteur (10);
former une couche de matériau actif d'électrode (20, 20') sur une surface du collecteur (10) ;
former une première couche de séparateur (30, 30') sur une surface de la couche du matériau actif d'électrode (20, 20'), la première couche de séparateur (30, 30') contenant un sel d'électrolyte et un liant ;
former une seconde couche de séparateur (40, 40') contenant une poudre de céramique sur une surface de la première couche de séparateur (30, 30') ;
dissoudre le sel d'électrolyte de la première couche de séparateur (30, 30') dans un solvant non aqueux de telle sorte que la première couche de séparateur (30, 30') présente une porosité de ou comprise entre 20 % et 80 %.

2. Procédé selon la revendication 1, dans lequel la seconde couche de séparateur (40, 40') est formée par dispersion de la poudre de céramique sur la surface de la première couche de séparateur (30, 30').

3. Procédé de fabrication d'une électrode destinée à être utilisée pour une batterie au lithium rechargeable, comprenant les étapes consistant à :
se procurer un collecteur (10) ;
former une couche de matériau actif d'électrode (20, 20') sur une surface du collecteur (10) ;
former une couche de séparateur combinée (50) sur une surface de la couche de matériau actif d'électrode (20, 20'), la couche de séparateur combinée (50) contenant un sel d'électrolyte, une poudre de céramique et un liant ;
dissoudre le sel d'électrolyte de la couche de séparateur combinée (50) dans un solvant non aqueux de telle sorte que la couche de séparateur combinée (50) présente une porosité de ou comprise entre 20 % et 80 %.

4. Procédé selon la revendication 3, dans lequel le liant et le matériau de céramique sont mélangés dans une rapport pondéral de ou compris entre 5:95 et 20:80.

5. Procédé selon l'une quelconque des revendications précédentes, dans lequel l'étape de dissolution du sel d'électrolyte comprend l'assemblage de l'électrode dans une batterie au lithium rechargeable incluant un électrolyte non aqueux.

6. Procédé selon l'une quelconque des revendications précédentes, dans lequel le sel d'électrolyte est un sel de lithium.

7. Procédé selon la revendication 6, dans lequel le sel de lithium est au moins un sel choisi dans le groupe constitué par LiPF₆, LiBF₄, LiSbF₆, LiAsF₆, LiClO₄, LiCF₃SO₃, Li(CF₃SO₂)₂N, LiC₄F₉SO₃, LiAlO₄, LIAlCl₄, LiN(CₓF₂ₓ₊₁SO₂)(CyF_{2y+1}SO₂) (dans lequel chaque x et y représente un nombre naturel), LiCl, LiI, ou des combinaisons de ces composés.

8. Procédé selon l'une quelconque des revendications précédentes, dans lequel le liant est une résine polymère.

9. Procédé selon la revendication 8, dans lequel le liant est au moins un matériau choisi dans le groupe constitué par le fluorure de polyvinylidène (PVDF), un copolymère de fluorure de polyhexafluoropropylène-polyvinylidène (PVdF/HFP), un copolymère d'éthylène-tétrafluoroéthylène (ETFE), le polychlorotrifluoroéthylène (PCTFE), l'acétate de polyvinyl, l'alcool polyvinylique, l'oxyde de polyéthylène, la polyvinylpyrrolidone, l'oxyde de polyéthylène alkylé, le polyvinyl éther, le méthacrylate de polyméthyle, l'acrylate de polyéthyle, le polytétrafluoroéthylène (PTE), le polyacrylonitrile, ou des combinaisons de ces composés.

10. Procédé selon l'une quelconque des revendications précédentes, dans lequel le sel d'électrolyte et le liant sont mélangés dans un rapport pondéral de ou compris entre 1:1 et 2:1.

11. Procédé selon l'une quelconque des revendications précédentes, dans lequel la première couche de séparateur (30, 30') ou la couche de séparateur combinée (50) a une épaisseur de ou comprise entre 1 µm et 40 µm.

12. Procédé selon la revendication 11, dans lequel la première couche de séparateur (30, 30') ou la couche de séparateur combinée (50) a une épaisseur de ou comprise entre 5 µm et 30 µm.

13. Procédé selon l'une quelconque des revendications précédentes, dans lequel la poudre de céramique contient des particules secondaires du matériau de céramique, obtenues par un frittage partiel ou une recristallisation partielle des particules primaires du matériau de céramique.

14. Procédé selon la revendication 13, dans lequel les particules secondaires contiennent des agglomérats de particules hexaédriques et/ou des agglomérats de particules en couches.

15. Procédé selon la revendication 13 ou 14, dans lequel les particules primaires ayant la forme d'agglomérats de particules hexaédriques ont un diamètre de ou compris entre 0,01 µm et 0,3 µm.

16. Procédé selon la revendication 13 ou 14, dans lequel les particules primaires ayant la forme d'agglomérats de particules en couches contiennent des éclats de type écaille ayant une largeur de ou comprise entre 100 mm et 1 µm.

17. Procédé selon l'une quelconque des revendications précédentes, dans lequel le matériau de céramique est au moins un matériau choisi dans le groupe constitué par la silice (SiO₂), l'alumine (Al₂O₃), l'oxyde de zirconium (ZrO₂), l'oxyde de titane (TiO₂), ou des combinaisons de ces composés.

18. Procédé selon l'une quelconque des revendications 1 à 16, dans lequel le matériau de céramique est au moins un matériau choisi dans le groupe constitué par des matériaux isolants comprenant des nitrures, hydroxydes et cétones de zirconium, aluminium, silicium, titane respectivement ou des combinaisons de ces composés.

19. Procédé selon l'une quelconque des revendications précédentes, dans lequel le matériau de céramique a un rapport de dilatation thermique de 0,2 % ou moins à 200 °C et un rapport de dilatation thermique de ou compris entre 0,1 % et 0,4 % à 400 °C.

20. Procédé selon l'une quelconque des revendications précédentes, dans lequel le matériau de céramique a une conductivité thermique correspondant à une plage de 10 % sur la base de 100 W/(m.K) dans une plage de température de ou comprise entre 500 °C et 1000°C.

21. Procédé selon l'une quelconque des revendications précédentes, dans lequel le matériau de céramique présente une perte diélectrique de ou comprise entre 10⁻⁵ et 10⁻² à une fréquence de 1 MHz.

22. Procédé selon l'une quelconque des revendications précédentes, consistant en outre à se procurer un film de résine à base de polyoléfine entre la cathode et l'anode.

23. Procédé selon la revendication 22, dans lequel le film de résine à base de polyoléfine est choisi dans le groupe constitué par un film monocouche de polyéthylène, un film monocouche de polypropylène et un film multicouche de polypropylène-polyéthylène-polypropylène.

24. Batterie au lithium rechargeable, comportant :
une cathode incluant un collecteur cathodique et une couche de matériau actif cathodique formée sur le collecteur cathodique ;
une anode incluant un collecteur anodique et une couche de matériau actif anodique formée sur le collecteur anodique ;
un électrolyte non aqueux entre la cathode et l'anode ;
une première couche de séparateur (30, 30') contenant un sel d'électrolyte et un liant, formée sur une surface de l'une des couches de matériau actif cathodique et de matériau actif anodique ; et
une seconde couche de séparateur (40, 40') contenant de la poudre de céramique, formée sur une surface de la première couche de séparateur (30, 30'),
dans laquelle, lorsque le sel d'électrolyte est dissous de la première couche de séparateur (30, 30') dans l'électrolyte non aqueux, la première couche de séparateur (30, 30') a une porosité de ou comprise entre 20 % et 80 %.

25. Batterie au lithium rechargeable, comportant :
une cathode incluant un collecteur cathodique et une couche de matériau actif cathodique formée sur le collecteur cathodique;
une anode incluant un collecteur anodique et une couche de matériau actif anodique formée sur le collecteur anodique ;
un électrolyte non aqueux ; et
une couche de séparateur combinée (50) contenant un sel d'électrolyte, un liant et une poudre de céramique et qui est formée sur une surface de l'une des couches de matériau actif cathodique et de matériau actif anodique,
dans laquelle, lorsque le sel d'électrolyte est dissous de la couche de séparateur combinée (50) dans l'électrolyte non aqueux, la couche de séparateur combinée (50) a une porosité de ou comprise entre 20 % et 80 %.
